# EUROPEAN PATENT SPECIFICATION

(11) **EP 0 560 038 B1**
(45) Date of publication and mention of the grant of the patent: **08.07.1998**
(21) Application number: 93101513.5
(22) Date of filing: 01.02.1993
(51) Int. Cl.: B29D 28/00

(54) **Process for the preparation of a lattice-shaped structure member**
Verfahren zur Herstellung eines Gitterrostes
Procédé de fabrication d'un élément de structure en treillis

(30) Priority: 30.01.1992 JP 15189/92
(43) Date of publication of application: 15.09.1993
(73) Proprietor: NIKKISO CO., LTD., Shibuya-ku Tokyo 150 (JP)
(72) Inventor: Kida, Fumio c/o Nikkiso Company Ltd., Shizuoka-ken (JP); Yoshinaga, Tetsuo c/o Nikkiso Company Ltd., Shizuoka-ken (JP)
(74) Representative: Hartmann, Günter, Dr. Dipl.-Chem.

(56) References cited:
- WO-A-90/07424
- DE-A- 1 629 336
- DE-A- 1 922 310
- DE-A- 2 852 350
- US-A- 3 772 126
- US-A- 4 137 354
- US-A- 5 074 950

## Description

The present invention relates to a process for the preparation of a structure member in the form of a lattice and, more particularly, to a process for the preparation of a structure member in the form of a lattice, so adapted as to be prepared by an automatic machine with high efficiency at a high yield rate, the structure member having so far been prepared by a manual operation only.

Heretofore, a lattice-shaped structure member having vertical members, or longitudinally extending structure member sections, and horizontal members, or transversely extending structure member sections, has extensively been employed in the field of architecture and in other fields as a structure member that requires a high degree of physical strength.

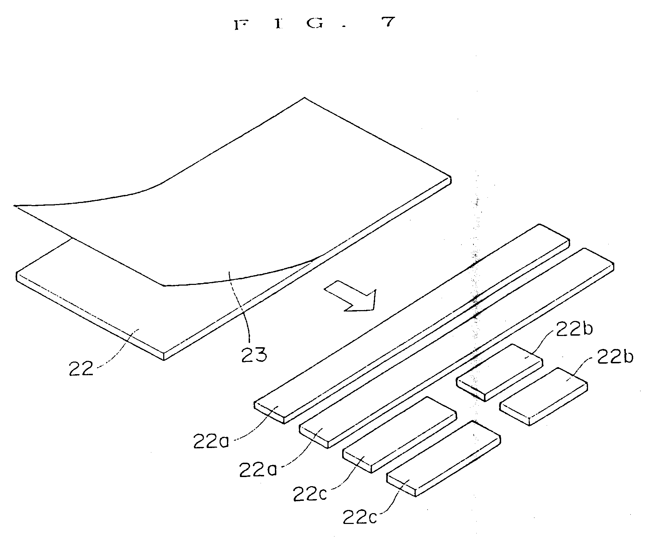

The lattice-shaped structure members have heretofore been prepared by a manual operation. In other words, as shown in Fig. 7, a prepreg 22 in the form of a sheet, which is provided with flexibility, adhesiveness, and curability, is first prepared by impregnating fabric of carbon fibers or graphite fibers with a curable material and then the resulting curable material is subjected to prepolymerization.

As shown in Fig. 7, a paper for peeling off is attached to each of both sides of the prepreg 22 so as for one sheet of the prepreg 22 not to adhere to another sheet of the prepreg 22 when the one sheet of the prepreg 22 is superimposed with another sheet thereof during storage and conveyance. Then the prepreg 22 with the paper 23 for peeling off attached thereto is cut, thereby forming, for example, a vertical plate 22a, a horizontal plate 22b so arranged as to be interposed between vertical plates 22a, and a horizontal plate 22c having a flange at each end of it. After the papers 23 have been removed, a plurality of the vertical plates 22a are superimposed with each other and the superimposed vertical plates 22a are made to stand erect so as to align their widthwise sides vertically. The erect vertical plates 22a are then aligned parallel to each other. In this case, the vertical plates and the horizontal plates are aligned by fitting them into molds having grooves in the form of a lattice.

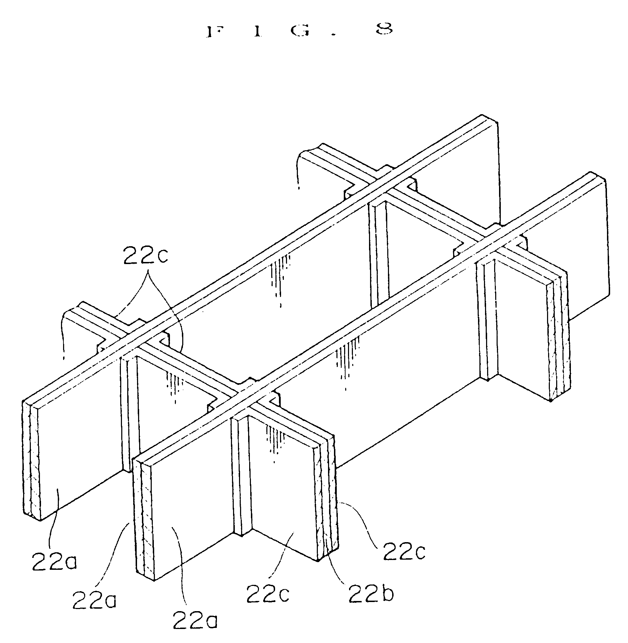

Each of the horizontal plates 22b is interposed between the vertical plates 22a and two sheets of the horizontal plates 22c with flanges are inserted into a space between the vertical plates 22a so as to interpose both sides of the horizontal plates 22b and so as to cause the exterior sides of each of the flanges of the horizontal plate 22c to abut with the inner side of each vertical plate 22a in order to fix the horizontal plate 22b tightly to the vertical plates 22a. A precursor of the lattice-shaped structure member, as shown in Fig. 8, may be prepared in the manner as described hereinabove. The precursor of the lattice-shaped structure member is then heated at a predetermined pressure and caused to cure in a state in which it is fitted in the mold, thereby forming the structure member in the form of a lattice.

WO 90/07424 describes a process fo the preparation of a structure member in the form of a lattice wherein a tow of prepreg prepared by impregnating a tow of a continuous fiber with a curable material is filled in a lattice-shaped groove provided in mold; and the tows of prepreg are heated at an elevated pressure to thereby integrate the tows of prepreg.

US-A-4 137 354 describes a method of forming a fiber reinforced lattice structure comprising the steps of laying a filament impregnated with a resin into a mold formed from a resilient material and having grooves; and heating the mold at an elevated pressure to integrate the impregnated filaments.

It is to be noted that the operations as described hereinabove have so far been carried out in a manual way. Hence, such manual operations may cause a variety of throubles: for example, the failure to peel off the paper form a prepreg; the inaccurate cutting of the prepreg; the wrong number of vertical plates or horizontal plates to be superimposed with each other; a wrong combination of vertical plates or horizontal plates; and a deviation of the position of interposition of a horizontal plate between vertical plates. These troubles may give defective products at a high rate, thereby reducing the yield rate of the acceptable products. Further, conventional operations may suffer from the disadvantage that a large number of chips of prepregs are formed in cutting the prepregs. In addition, the conventional procedures present the drawback that they require a longer period of time for completing to produce the lattice-shaped structure members because the lattice-shaped structure members are prepared by manual work.

The present invention has been completed on the basis of the circumstances as described hereinabove. In other words, the object of the present invention is to provide a process for the preparation of a structure member in the form of a lattice, which provides no chips of the prepreg, which is prompt and certain in production, and which has a high yield rate of acceptable products.

Surprisingly, it has been found that the above object of the present invention can be achieved by a process for the preparation of a structure member in the form of a lattice which comprises the steps of:
a) filling a lattice-shaped groove provided in a mold with a combined filament yarn or a tow prepreg prepared by impregnating a tow of a continuous fiber with a curable material, wherein a plurality of layers of the tow prepreg are built up on each other in a stacked disposition, and
b) heating the mold at an elevated pressure to integrate the content of the groove into the structure member in the form of the lattice, the said process being characterized in that
c) an opening of the mold is covered with a covering member while reducing pressure in the mold after completion of the filling in step (a) and before the heating in step (b).

According to the above process a lattice-shaped structure member having no voids inside can be obtained while on the other hand the members obtained according to prior art processes have a considerable amount of voids inside. As known to any expert in this technical field such voids considerably lower strength of lattice-shape structure members.

According to a first preferred embodiment of the present invention a durable material is fed into the mold while the pressure in the mold is reduced.

According to a further preferred embodiment the process of the present invention comprises modifying step (a) by placing a continuous fiber into the lattice-shaped groove provided in a mold wherein a plurality of layers of the continuous fiber is built up on each other in a stacked disposition, then covering an opening of the mold with a covering member and filling the lattice-shaped groove with a curable material while reducing pressure in the mold.

The mold used according to the present invention preferably is made of a material having rubber elasticity.

According to an other preferred embodiment of the process of the present invention the lattice-shaped groove comprises a longitudinal groove section for molding a longitudinal structure member and a transverse groove section for molding a transverse structure member.

According to a further preferred embodiment of the process of the present invention a fiber-containing prepreg sheet whose fibers are oriented in one direction or a fabric-containing prepreg sheet is attached to at least one inner wall side of the lattice-shaped groove so that the fibers of the fabric are arranged in a direction being different from the direction of the combined filament yarn, the tow or the continuous fiber.

The prepreg sheet preferably is arranged in a transverse groove section of the lattice-shaped groove for molding a transverse structure member.

According to an other preferred embodiment the process of the present invention comprises the steps of:
attaching a fiber-containing prepreg sheet whose fibers are oriented in one direction or a fabric-containing prepreg sheet to a structure member section of the lattice-shaped structure member prepared by a process as described above so that the fibers of the fabric are arranged in a direction being different from the direction of the combined filament yarn, the tow or the continuous fiber; and
heating the prepreg sheet to integrate it with the lattice-shaped structure member.

Further objects and features of the present invention can be seen from the following detailed description in connection with the enclosed drawings.

Fig. 1 is a partially cut-away, perspective view showing an example of mold to he employed for the present invention.

Fig. 2 is a schematic representation for describing an example of a procedure for disposing tows of prepreg in a groove of the mold by the process according to the present invention.

Fig. 3 is a schematic representation for describing an example of a procedure and a device for disposing the tows of prepreg in a groove of the mold by the process according to the present invention.

Fig. 4 is a schematic representation for describing another example of a procedure and a device for disposing or placing the tows of prepreg in a groove of the mold by the process according to the present invention.

Fig. 5 is a partially sectional, perspective view describing another example of a process for the preparation of a structure member in the form of the lattice.

Fig. 6 is a partially sectional, perspective view describing a further example of a process for the preparation of a structure member in the form of the lattice.

Fig. 7 is a perspective view showing a prepreg in the form of a sheet to be conventionally employed for the preparation of a lattice-shaped structure member and showing plates for structure member sections thereof cut from the prepreg in the form of the sheet.

Fig. 8 is a perspective view showing an example of a lattice-shaped structure member formed by joining the structure member sections cut from the prepreg in the form of a sheet to be conventionally employed for the preparation of the structure member in the form of the lattice.

In the drawings, reference numerals are intended to mean elements and members, as will be described hereinafter.

| Reference Numerals | Elements & Members |
|---|---|
| 1 | Mold |
| 2 | Groove |
| 2a | Transverse groove |
| 2b | Longitudinal groove |
| 3 | Tow of prepreg |
| 4 | Means for engaging or clamping the end section of a tow of prepreg |
| 5 | First clamping means |
| 6 | First cutting means |
| 7 | Supporting member |
| 8 | Arm member |
| 9 | Second clamping means |
| 10 | Tightening means for tightening a tow of prepreg |
| 11 | Third clamping means |
| 12 | Fourth clamping means |
| 14 | Guide roller |
| 15 | Cheese |
| 16 | Tow of prepreg guiding means |
| 30A, 30B, 30C, 30D | Prepreg in the form of a sheet |

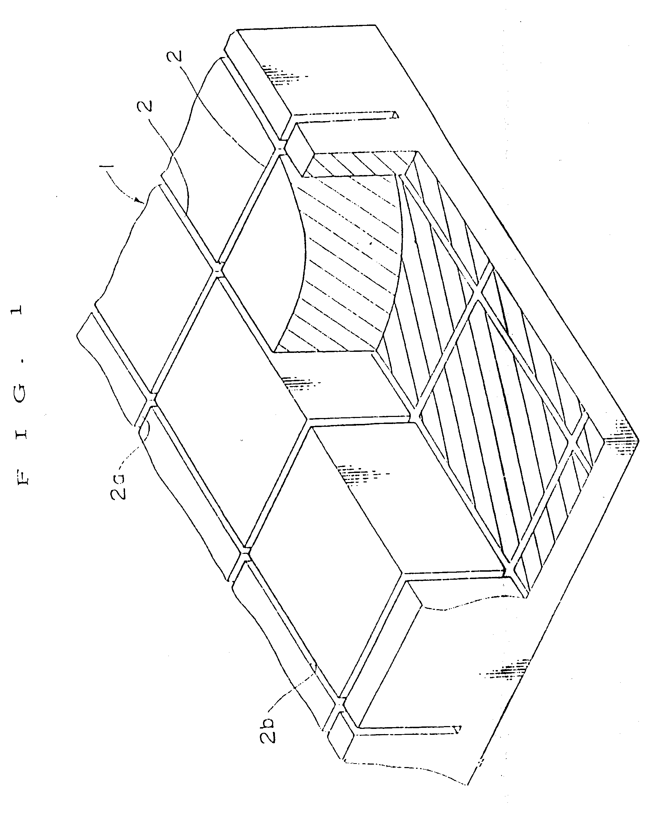

As shown in Fig. 1, the mold 1 to be employed for the present invention is provided with the grooves 2 in the form of the lattice. The depth of each of the grooves 2 and the transverse and longitudinal intervals between the groove 2 and the adjacent groove 2 may appropriately be determined on the basis of the kind of the lattice-shaped structure member sought to be prepared. In other words, various dimensions of the groove 2 of the lattice-shaped structure member may be determined on the basis of the determination of the transverse and longitudinal dimensions and the thickness of the vertical web (a longitudinal structure member section) and the horizontal web (a transverse structure member section), the number of the vertical webs, the number of the horizontal webs, the interval between the vertical webs and the adjacent vertical web, and the interval between the horizontal web and the adjacent horizontal web.

It is to be noted herein that the lattice-shaped structure member referred to the present invention is not restricted to the one in which the vertical web is disposed in a position perpendicular to the horizontal web and that a lattice-shaped structure member is intended to be encompassed in the lattice-shaped structure member referred to herein, the lattice-shaped structure member being disposed in such a manner that the horizontal web crosses the vertical web at any arbitrary angle other than at the right angle. Hence, the groove may be designed so as to allow the horizontal web to cross with the vertical web at any other arbitrary angle and at the right angle as well.

It can further be noted herein that the lattice-shaped structure member is not restricted to a structure in which the vertical webs and the horizontal webs may always be disposed at equal intervals and that some of the vertical webs or the horizontal webs for the lattice-shaped structure member may be arranged at different intervals in accordance with the usage of the lattice-shaped structure member, although the remaining vertical webs or horizontal webs are disposed at equal intervals. Hence, the mold 1 to be employed for the preparation of the such lattice-shaped structure member may be prepared in such a manner that the corresponding transverse grooves or longitudinal grooves are disposed at the different intervals while the rest of the transverse or longitudinal grooves is provided at equal intervals.

In addition, it can be noted herein that the lattice plane of the vertical webs or the horizontal webs is not necessarily arranged to be vertical and that each of the sides of the vertical web or the horizontal web is not necessarily flat. For example, the horizontal web may be arranged so as to lean to some extent with respect to the plane of the lattice (i.e. in the direction of thickness of the horizontal web) or so as to be curved to some extent in the direction of thickness of the horizontal web or so as to vary in thickness with vertical positions of the horizontal web, as long as this arrangement for the structure member section does not adversely affect the insertion of the tow of prepreg.

The material for the mold 1 is not restricted to a particular one as long as it can withstand high temperature and pressure to be applied in the subsequent step and it can readily be provided with the grooves 2. As the such material, there may be mentioned, for example, a material having rubber elasticity, a metal, a hard resin, a wooden material, and a sintered ceramic body. It can be noted herein that, whatever is used for the material, there should appropriately be selected such a material as having a satisfactory degree of heat resistance to withstand the heat to be applied at the subsequent step or as failing to swell or erode with the uncured curable material or with the molten curable material when the curable material is caused to melt during heating at the subsequent step.

In accordance with the present invention, the material having rubber elasticity may appropriately be employed. The use of the such material can offer the advantages that, when the mold 1 are prepared with the material having rubber elasticity, it is easy to remove the lattice-shaped structure member from the mold 1 when the curable material is settled to cure and that the product can be made finer and denser by an application of elevated pressure by making use of a highly thermally expandable property of the material having rubber elasticity. As the material having rubber elasticity, there may appropriately be mentioned, for example, one having a three-dimensional network structure, and the material may be selected by choosing appropriate conditions, such as molecular weights from materials having the three-dimensional network structure, such as, for example, silicone rubber, polyurethane rubber, BUNA rubber, BS rubber, and fluorine rubber.

The mold 1 with the grooves 2 formed therein may be prepared by cutting the lattice-shaped grooves 2, for example, in a flat material or by pouring a material into a mother mold formed with a metal or the like for the lattice-shaped structure member and solidifying the material into the mold 1. Further, the mold 1 with the grooves 2 formed therein may be prepared by arranging rectangularly hexahedral blocks and/or cubic blocks in the predetermined intervals on a flat plate so as to correspond to the set width of the groove 2 and fixing them thereon. In summary, the mold 1 may be prepared by any procedures as long as the mold 1 are eventually formed with the grooves 2 in the form of the lattice.

Further, the mold 1 may be provided with a heater therein. With this arrangement for the mold 1, the lattice-shaped structure member may be prepared conveniently by raising the temperature of the mold 1 in advance when a thermoplastic resin is employed as the curable material in the tow of prepreg, the fibers made of the curable material in the combined filament yarn, or the curable material inserted into the grooves 2.

As the curable material, there may be employed any curable material capable of functioning as a matrix for the continuous fibers in the lattice-shaped structure member and there may be mentioned, for example, a thermosetting resin, a thermoplastic resin, and a material capable of forming ceramics by heating.

The thermosetting resin may include, for example, epoxy resin, polyurethane, unsaturated polyester resin, phenol resin, xylene resin, diallyl phthalate resin, aniline resin, furan resin, and poly-bismaleimide. Further, it should be noted herein that the category of the thermosetting resin referred to in the present invention may be intended to contain a combination of a curable prepolymer with a curing agent, such as a combination of a diallyl phthalate prepolymer with a peroxide catalyst.

As the thermoplastic resins, there may be mentioned, for example, a polyolefin such as polyethylene, polypropylene, and polybutene, polyester, polysulfone, polyether ether ketone (PEEK), aromatic polyether, polyamide, and polyimide.

In addition, the material capable of forming the ceramics by heating may include, for example, a tetraalkoxy alkylsilane.

The continuous fibers are not restricted to particular ones as long as they can contribute to the mechanical strength of the lattice-shaped structure member together with the matrix in the lattice-shaped structure member as well. As the continuous fibers, there may be mentioned, for example, carbon fibers, graphite fibers, glass fibers, ceramics fibers, and superpolyethylene fibers.

When a sizing agent or the like adheres to the tows of the continuous fibers, it is desired that foreign matters such as the sizing agent and so on are removed in advance by washing or by other procedures. It is further preferred that the tows of the continuous fibers are not twisted. Even if they are twisted, however, it is desired that the number of twists is less than 20 twists per meter of the continuous fiber. If the filaments of the tow of the continuous fibers are bonded to each other, it is also desired that the binding of the filaments thereof is unravelled. The procedures for unravelling the bonded filaments of the tow of the continuous fibers may be chosen from any conventional ones including, for example, a procedure for blowing jet flow onto the continuous fibers without causing any damage against them.

The method for the preparation of the tow prepregs is not restricted to a particular one and the tow of prepreg may be prepared by a variety of procedures as long as the tows of the continuous fibers are impregnated with the curable material. For instance, the prepregs may be prepared by impregnating the tows of the continuous fibers with an uncured resin and then curing the uncured resin to an intermediate extent. This intermediately cured resin in the tow of prepreg can be molten and integrated with each other by heating and then cured to form a matrix of the curable material.

The tow of prepreg having the tows of the continuous fibers impregnated with the curable material exists in such a state that the tows thereof are dispersed and fixed in the matrix of the curable material.

The sectional shape of the tow of prepreg is not restricted to a particular one and it may be generally circular, oval or flat rectangular. What sectional shape the tow of prepreg has may appropriately be determined on the basis of the dimension or size of the lattice-shaped structure member. Further, the ratio of the weight of the continuous fibers to the weight of the curable material in the tow of prepreg may appropriately be determined in accordance with the mechanical strength and other physical characteristics which are required for the resulting lattice-shaped structure member.

For the method according to the present invention, the combined filament yarn may be employed in addition to the tow of prepreg.

The combined filament yarn may be prepared by spinning the tows of the continuous fibers and the continuous fibers of the thermoplastic resin. As the continuous fibers and the thermoplastic resin, there may be employed those as described hereinabove. The combined filament yarn may cause its thermoplastic resin to be molten by heating and integrated, thereby allowing the thermoplastic resin to form the matrix.

The fiber diameter of the continuous fibers in the combined filament yarn may appropriately be determined on the basis of the mechanical strength and so on required for the lattice-shaped structure member according to the present invention. Further, it can be noted that the ratio of the weight of the continuous fibers to the weight of the curable material may conveniently be determined in accordance with the mechanical strength and other physical characteristics required for the lattice-shaped structure member. In addition, it can be noted that, although the sectional shape of the combined filament yarn is not restricted to a particular one, it may be nearly circular, oval or flat rectangular and that it can appropriately be determined on the basis of the dimension or the size of the lattice-shaped structure member.

The lattice-shaped structure member may be prepared by using the tow of prepreg and the mold having the grooves in the form of the lattice in such a manner as will be described hereinafter.

A first procedure for the preparation of the lattice-shaped structure member will be described hereinafter.

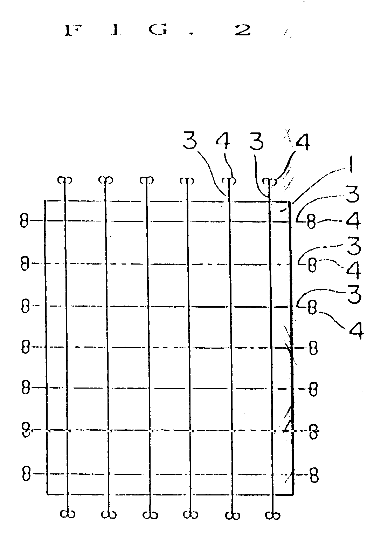

As shown in Fig. 2, a tow of prepreg 3 is placed in all the plural transverse grooves 2a formed in the mold 1 as shown in Fig. 1 and it is allowed to settle on the bottoms of the grooves 2a. Thereafter, the tow of prepreg 3 is placed in all the plural longitudinal grooves 2b formed in the mold 1, thereby causing the tow of prepregs 3 placed in the longitudinal grooves 2b to cross the tow of prepregs 3 placed in the transverse grooves 2a at the crossings of the lattice-shaped grooves 2. Then, the tow of prepreg 3 is further placed in all the transverse grooves 2a to thereby superimpose it over the tow of prepreg 3 placed in the previous step, followed by placing the tow of prepreg 3 in all the longitudinal grooves 2b to thereby superimpose it over the tow of prepreg 3 placed in the previous step.

By alternately repeating the procedures for placing the tow of prepreg 3 in all the transverse grooves 2a and in all the longitudinal grooves 2b, the tows of prepreg 3 are filled in the both transverse and longitudinal grooves 2a and 2b in the direction of depth of the mold 1. In order to fill the tows of prepreg 3 in the both transverse and longitudinal grooves 2a and 2b in a tight fashion, a pressing member, not shown in the drawings, may be inserted into the transverse and longitudinal grooves 2a and 2b and it may be operated to press the tow of prepregs 3 toward the bottoms of the transverse and longitudinal grooves 2a and 2b, whenever the tow of prepreg 3 is filled therein or after a plurality of the tow of prepreg 3 are filled therein.

It can be noted herein, however, that the mode for arranging the tows of prepreg 3 in the transverse and longitudinal grooves 2a and 2b is not restricted to the one as has been described hereinabove. For instance, the plural transverse grooves 2a formed in the mold 1 are provided with reference numbers from another side of the mold 1 and the plural longitudinal grooves 2b formed therein is likewise provided with reference numbers from one corresponding side of the mold 1. Then, the tow of prepreg 3 is placed in all the even-numbered, transverse grooves 2a and then it is likewise placed in all the even-numbered, longitudinal grooves 2b. Thereafter, the tow of prepreg 3 is placed in all the odd-numbered, transverse grooves 2a and then it is likewise placed in all the odd-numbered, longitudinal grooves 2b. This operation is then repeated alternately to allow the tow of prepreg 3 to be filled in all the transverse and longitudinal grooves 2a and 2b.

It can be noted herein that the order of placing the tow of prepreg 3 in the transverse and longitudinal grooves 2a and 2b is not restricted to a particular one and it is optional.

Further, it can be noted that the number of the tow of prepreg 3 to be filled in each of the transverse and longitudinal grooves 2a and 2b is not restricted to one. Two or more tows of prepreg 3 may be filled in each of the transverse and longitudinal grooves 2a and 2b in accordance with the thickness of the vertical web and the horizontal web in the lattice-shaped structure member and the sectional shape of the tow of prepreg 3. In Fig. 2, reference numeral 4 denotes the means for engaging or clamping the end portions of the tow of prepreg 3.

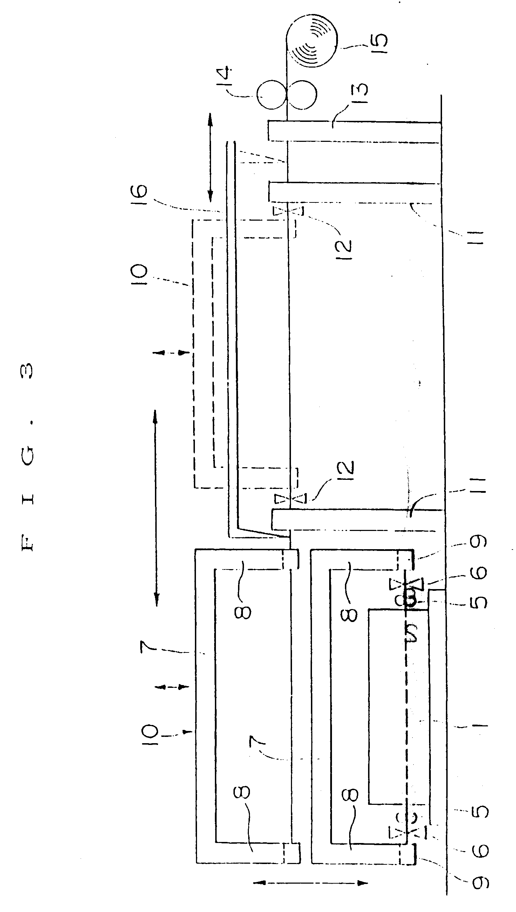

The tow of prepreg 3 may be filled in the grooves 2 with the aid of, for example, a transverse placement device for placing the tows of prepreg in the transverse direction, as shown in Fig. 3.

As shown in Fig. 3, the transverse placement device is provided with the first clamping means 5 for clamping the tow prepreg 3, for example, with a clamp, on each of both sides of the mold 1 disposed on a horizontally movable table and in the position corresponding to each of the transverse grooves 2. Outside a pair of the first clamping means 5, there are disposed a pair of the first cutting means 6 for cutting the tow of prepreg 3.

On the other hand, tightening means 10 for tightenning the tow of prepreg, comprising of that a horizontally extending supporting member 7 is provided at its both ends with the arm members 8 extending vertically downward, and each of the arm members 8 is provided at its bottom end with the second clamping means 9 for clamping the tow of prepreg 3, is so arranged as to be movable in the vertical direction with respect to the mold 1, as to be evacuated from the mold 1 by moving it horizontally, and as to be movable vertically in the position in which the tightening means 10 is evacuated from the mold 1. In this case, in order to determine the optimally lowered position of the tightening means 10 suitable for placing the tow of prepreg 3, that is, the bottom dead center, the tightening means 10 for tightening the tow of prepreg 3 may preferably be provided in its optional position with a groove detecting means for detecting a groove.

On the side of the mold 1 in the position in which the tightening means 10 is evacuated from the mold 1, a pair of the third clamping means 11 for clamping the tow of prepreg 3 are disposed in an interval wider than the distance between the arm members 8. Inside each of the pair of the third clamping means 11 and in the positions in which they face each other, a pair of the second cutting means 12 are provided in the positions closer to the corresponding third clamping means 11. Further, the fourth clamping means 13 is arranged in a row with respect to and next to the third clamping means 11. In the vicinity of the third clamping means 11, some guide rollers 14 are disposed, thereby capable of feeding the tows of prepreg 3 from the cheese 15 of the rolled tow of prepreg 3.

Over the third clamping means 11 and the fourth clamping means 13, the tow prepreg guiding means 16 for guiding the tow of prepreg 3 is disposed to be movable in horizontal and vertical directions. The tow prepreg guiding means 16 is so arranged as to clamp the end portion of the tow of prepreg 3 and to allow the third clamping means 11 disposed in the position closer to the mold 1, out of the pair of the third clamping means 11, to clamp the end portion of the tow of prepreg 3.

The transverse placement device for placing the tow of prepreg 3 in the transverse grooves 2a formed in the mold 1 has been described hereinabove. It can be noted herein that a longitudinal placement device for placing the tow of prepreg 3 in the longitudinal grooves 2b formed in the mold 1 has substantially the same structure as the transverse placement device, so that a description of the longitudinal placement device will be omitted from the description of the present specification for brevity of explanation.

The tow of prepreg 3 may be placed in the transverse grooves 2a with the transverse placement device in the manner as will be described hereinafter.

In other words, an initial state is set in such a manner that the end portion of the tow of prepreg 3 is drawn from the cheese 15 of the tow of prepreg 3 and it is clamped with the fourth clamping means 13 and the third clamping means 11 through the guide rollers 14.

Then, the tow prepreg guiding means 16 is lowered and clamps the end portion of the tow of prepreg 3 stretched and spanned with the third clamping means 11 and the fourth clamping means 13, followed by releasing the clamped state of the tow of prepreg 3 in which the tow of prepreg 3 is clamped with the third clamping means 11 and the fourth clamping means 13. Thereafter, the tow prepreg guiding means 16 is raised and then moved in the horizontal direction, followed by feeding the tow of prepreg 3 from the cheese 15 and then allowing the end portion of the tow of prepreg 3 to be clamped with the third clamping means 11 disposed in the position closer to the forms 1 and the intermediate portion of the tow prepreg 3 to be clamped with the third clamping means 11 disposed in the position remoter from the forms 1. The tow of prepreg 3 is spanned with a pair of the third clamping means 11 in such a state as has been described hereinabove.

Thereafter, the tow prepreg tightening means 10 is lowered and the second clamping means 9 disposed at the bottom end of the arm member 8 is allowed to clamp the tow of prepreg 3 spanned between the pair of the third clamping means 11, followed by cutting the tow of prepreg 3 with the second cutting means 12 and then allowing the tow of prepreg 3 to be spanned and suspended between the pair of the second clamping means 9. Then, the tow prepreg tightening means 10 is raised in the state in which the tow of prepreg 3 is suspended between the second clamping means 9, and then it is moved in the horizontal direction up to the position over the mold 1. Then, the tow prepreg tightening means 10 is lowered toward the mold 1. As the tow of prepreg 3 spanned with the tow prepreg tightening means 10 has reached the bottom of the transverse grooves 2a of the mold 1, the operation of the tow prepreg tightening means 10 is suspended, followed by causing the first clamping means 5 to clamp the tow of prepreg 3 and the first cutting means 6 to cut the tow of prepreg 3 clamped with the first clamping means 5.

Then, the tow of prepreg 3 is placed in the transverse grooves 2a in the manner as has been described hereinabove. Thereafter, the tow prepreg tightening means 10 is raised, then moved in the horizontal direction, and returned to the position in which the tow prepreg tightening means 10 is evacuated from the mold 1. Then, the mold 1 with the tow of prepreg 3 placed in its transverse grooves 2a are transferred horizontally to the position in which the tow of prepreg 3 is allowed to be placed in the transverse groove 2a adjacent to the transverse groove 2a in which the tow of prepreg 3 has already been placed. In this case, a groove detecting means for detecting the transverse groove 2a may preferably be provided in any appropriate position in order to control the displacement of the mold 1.

The repetition of the operations to be made in the manner as described hereinabove allows the tows of prepreg 3 to be placed in all the transverse grooves 2a. It can be noted herein that the tows of prepreg 3 in the longitudinal grooves 2b may be placed by substantially the same operations as described hereinabove with the longitudinal placement device having substantially the same structure as the transverse placement device.

It is to be noted herein, however, that the automatic placement devices are not restricted to the transverse and longitudinal placement devices for placing the tows of prepreg 3 in the transverse grooves 2a and the longitudinal grooves 2b as described hereinabove, and the tow of prepreg 3 can be placed in the grooves 2 of the forms 1 with an automatic placement device as will be described hereinafter.

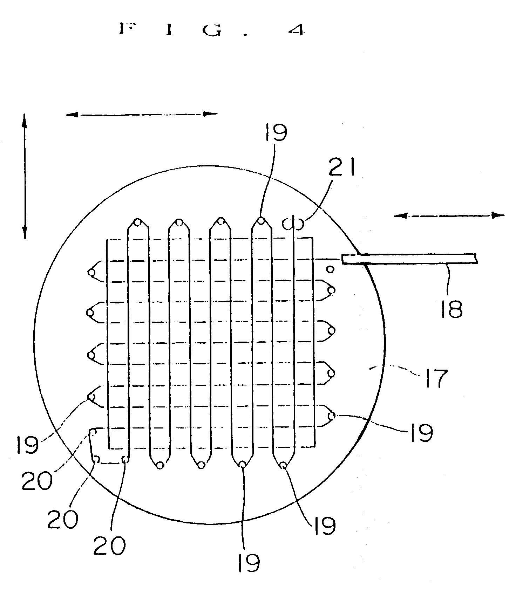

As shown in Fig. 4, the automatic placement device is provided with a rotary table 17 and a tow prepreg feeding means 18. The rotary table 17 is so arranged as to be rotable in the clockwise and counterclockwise directions as well as to be movable in the horizontally transverse direction and in the horizontally longitudinal direction. On the top face of the rotary table 17, there are provided a fixing means (not shown) for fixing the mold 1 with the lattice-shaped grooves 2, a plurality of first guide pins 19 disposed standing in each position outside yet next to the groove 2 and between the groove 2 and the adjacent groove 2, a plurality of second guide pins 20 disposed standing for guiding the tow of prepreg 3 disposed in the transverse groove 2a to the longitudinal groove 2b, and a clamping means 21 for clamping the end portion of the tow of prepreg 3 located in the farthest position, that is, in the opposite position, from the position in which the placement of the tow of prepreg 3 is changed from the transverse groove 2a to the longitudinal groove 2b.

It should be noted herein that, in order to deal with the situation in which the intervals of all the grooves 2 are not equal to each other, a position adjusting means for adjusting the positions of the first guide pins 19 may conveniently be provided so as to allow the first guide pins 19 to be variably disposed in accordance with the intervals of the grooves 2.

The tow prepreg feeding means 18 is so arranged as to move in the horizontal direction as well as in the vertical direction and as to feed the tow of prepreg 3 from its tip section with a constant degree of tension.

The tow of prepreg 3 can be placed and filled in the grooves 2 with the automatic placement device as shown in Fig. 4 in such a manner as will be described hereinafter. In other words, the tow prepreg feeding means 18 is moved horizontally and the tow of prepreg 3 is fed from the tow prepreg feeding means 18 to thereby place and fill the tow of prepreg 3 in the first transverse groove 2a located, for example, at the uppermost end side of the transverse grooves 2a.

Then, the feeding of the tow of prepreg 3 from the tow prepreg feeding means 18 is suspended and the horizontal movement of the tow prepreg feeding means 18 is also suspended temporarily. Then, the rotary table 17 is moved horizontally in the distance corresponding to the interval between the first transverse groove 2a and the adjacent (second) transverse groove 2a, thereby allowing the tow prepreg, feeding means 18 to be located in the position corresponding to the second transverse groove 2a. Thereafter, the tow prepreg feeding means 18 is moved in the horizontal direction along and parallel to the second transverse groove 2a, thereby placing the tow of prepreg 3 in the second transverse groove 2a. As the tow of prepreg 3 has been placed in the second transverse groove 2a, the tow of prepreg feeding means 18 is suspended in the position outside the mold 1 corresponding to the end of the second transverse groove 2a and the rotary table 17 is then moved horizontally in the distance corresponding to the interval between the second transverse groove 2a and the adjacent (third) transverse groove 2a, thereby allowing the tow prepreg feeding means 18 to be located in the third transverse groove 2a and thereafter placing the tow of prepreg 3 in the third transverse groove 2a while moving the tow prepreg feeding means 18 in the horizontal direction along and parallel to the third transverse groove 2a.

As has been described hereinabove, the position of the rotary table 17 is adjusted to align the tow prepreg feeding means 18 in the position extending in the horizontal direction parallel to the transverse groove 2a so as to place the tow of prepreg 3 in the corresponding transverse groove 2a, and the tow of prepreg 3 fed from the tow prepreg feeding means 18 is placed in the corresponding transverse groove 2a by the horizontal movement of the tow prepreg feeding means 18. After the placement of the tow of prepreg 3 in the transverse groove 2a has been finished, the tow prepreg feeding means 18 is moved in the position extending in the horizontal direction parallel to the adjacent transverse groove 2a by the horizontal movement of the rotary table 17, thereby placing the tow of prepreg 3 in thee corresponding transverse groove 2a. By repeating the operations in the manner as described hereinabove, the tow of prepreg 3 is placed in all the transverse grooves 2a.

Thereafter, the rotary table 17 is rotated at 90° and then moved horizontally to allow the tow prepreg feeding means 18 to exist in the position corresponding to the longitudinal groove 2b located at the end side of the grooves 2. As the rotary table 17 rotates, the tow of prepreg 3 drawn from the tow prepreg feeding means 18 is wound about the plural second guide pins 20, thereby allowing the direction of placing the tow of prepreg 3 to turn to the longitudinal direction from the transverse direction, as shown in Fig. 4. Then, the tow prepreg feeding means 18 starts moving in the horizontal direction along and parallel to the end-sided (first) longitudinal groove 2b. The tow of prepreg 3 is placed and filled in each of the longitudinal grooves 2b in substantially the same manner as has been placed in the transverse grooves 2a.

After a first stage of the placement of the tow of prepreg 3 in both of the transverse grooves 2a and the longitudinal grooves 2b has been finished in the manner as described hereinabove, a second stage of the placement of the tow of prepreg 3 begins in both of the transverse grooves 2a and the longitudinal grooves 2b in substantially the same manner as the first stage of the placement thereof. It can be noted herein that the tow of prepreg 3 may be pressed downward with the pressing member whenever the tow of prepreg 3 has been filled in the transverse groove 2a and the longitudinal groove 2b or when a few or several stages of the placement of the tow of prepregs 3 have been finished. The repetitive operations for placing the tow of prepreg 3 can fill all the transverse grooves 2a and the longitudinal grooves 2b with the tows of prepreg 2. When the placement of the tow of prepreg 3 has been finished, the tows of prepreg 3 are protruding in loop form from the sides of the mold 1 so that they may be cut with appropriate means.

After the tows of prepreg 3 have been filled in the lattice-shaped grooves 2 of the mold 1, they are heated at elevated pressure while they are kept placed in the grooves 2 of the mold 1, thereby integrating the tows of prepreg 3 to each other. Before heating, the openings at the upper face of the mold 1 are covered with the appropriate covering member. For example, the entirely upper face of the mold 1 is covered with a sheet or a film of a plastic material, while reducing pressure, as needed. The heating temperature may optionally be set so as to allow the curable material to become flowable and then cure. The pressure to be applied upon heating may appropriately be determined so as to allow a rapid integration of the tows of prepreg 3 with each other. The heating at elevated pressure may optionally be carried out with an autoclave or the like.

After the heating at elevated pressure, the resulting lattice-shaped structure member is removed from the mold 1.

Now, a description will be made of a second mode of the process for the preparation of the lattice-shaped structure member by using the tow of prepreg and the mold with the grooves in the form of a lattice.

In accordance with the second mode of the process according to the present invention, the tow of prepreg is placed in the lattice-shaped grooves of the mold in substantially the same manner as in the first mode of the process as described hereinabove. The upper openings of the grooves are covered with appropriate means; for example, the entire upper area of the mold is covered with a sheet or a film. It should be noted herein that the mold 1 are provided in advance with inlets for feeding the curable material into the grooves from the outside of the mold. As the curable material is fed through the inlets into the grooves, the gaps among the tows of prepreg and the entire space of the grooves are filled with the curable material. It can be noted herein that the curable material can effectively be filled in the grooves and the gaps among the tows of prepreg by reducing pressure in the grooves with appropriate exhausting means during the feeding of the curable material. After the curable material has been filled, the mold is heated at elevated pressure while the openings of the grooves are kept covered, thereby curing the tows of prepreg and the curable material and preparing the structure member in the form of the lattice.

A further mode can be adopted for the process according to the present invention in a manner as will be described hereinafter, although this mode can be applied to the first and second modes of the process for the preparation of the lattice-shaped structure member by using the tow of prepreg and the mold with the lattice-shaped grooves provided therein.

More specifically, a prepreg in the form of a sheet, having fibers arranged in one direction, or a prepreg in the form of a sheet, containing fabric, is attached in advance to one inner wall side or both inner wall sides of the groove so as to arrange for the fibers to be oriented in the direction of thickness of the groove.

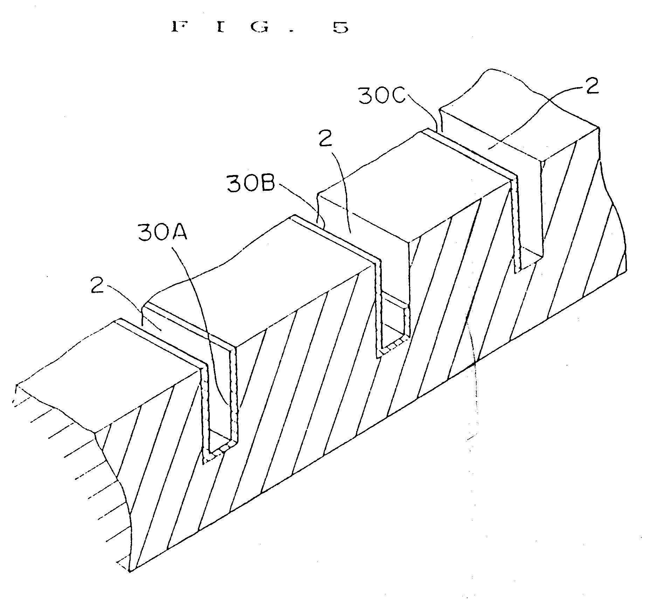

As shown in Fig. 5, the prepreg in the form of a sheet may be placed in such a manner that one inner wall face of the groove 2, a bottom inner wall face thereof, and the opposite inner wall face thereof are covered with a prepreg 30A; that one inner wall face of the groove 2, a bottom inner wall face thereof, and a portion of the opposite inner wall face thereof are covered with a prepreg 30B; and that one inner wall face of the groove 2 is covered with such a prepreg 30C. In the mode as shown in Fig. 5, the tow of prepreg 3 is then filled in the grooves 2 with the prepreg in the form of the sheet attached thereto in advance in the manner as described hereinabove.

Then, the lattice-shaped structure member can be prepared by any one of the first mode and the second mode of the process according to the present invention.

It can be noted that the lattice-shaped structure member prepared by this mode of the process is arranged in such a manner that the direction of orientation of the fibers in the prepreg in the form of the sheet, attached in advance to the inner wall face or faces of the grooves, is different from the direction of orientation of the fibers filled thereafter in the grooves. Hence, the lattice-shaped structure member prepared by using the prepreg in the form of the sheet is provided with improved physical strength to a higher extent than the lattice-shaped structure member prepared without the use of the prepreg in the form of the sheet, thereby preventing cracks from occurring in the transverse direction of the structure member sections of the lattice-shaped structure member due to impact or the like.

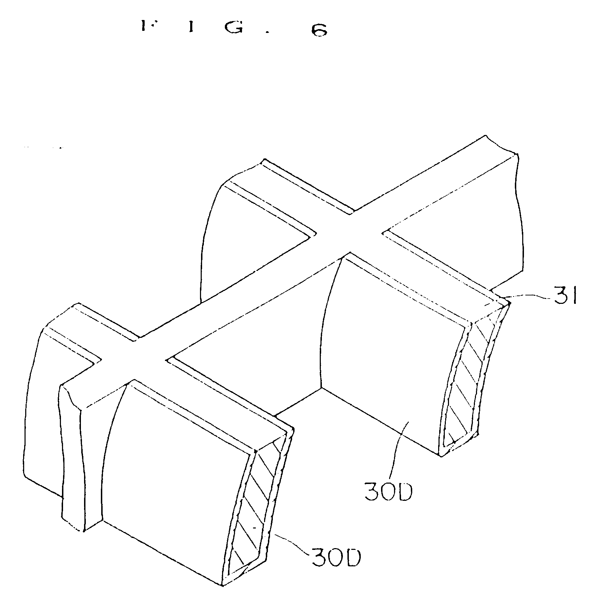

Further, it can be noted that, in addition to those modes as described hereinabove, the reinforcement of the lattice-shaped structure member can be achieved, as shown in Fig. 6, by attaching a prepreg 30D having the fibers oriented in one direction or containing the fabric to a structure member section 31 of the lattice-shaped structure member prepared by using the tow of prepreg and settling the prepreg 30D to cure by heating to thereby integrate the prepreg 30D with the structure member section 31.

The prepreg in the form of the sheet to be employed for the reinforcement of the strength of the lattice-shaped structure member prepared without the use of the prepreg in the form of the sheet may be prepared from the same thermosetting resin or from the fibers of the same continuous fibers as those that are to be employed for the tow prepreg.

It should be noted herein that, although the foregoing description is directed to the process for the preparation of the lattice-shaped structure member by using the tow of prepreg, the lattice-shaped structure member can be prepared by using the combined filament yarn, in place of the tow of prepreg, in substantially the manner as in the process in which the tow of prepreg is employed. Further, the lattice-shaped structure member can be prepared in substantially the same manner as in the process by using the tow of prepreg, by placing the continuous fibers in the lattice-shaped grooves of the forms, filling the grooves with the curable material, and then heating the curable material at elevated pressure.

The process for the preparation of the lattice-shaped structure member according to the present invention can produce the structure member in the form of the lattice without requiring manual operations. Hence, the process can solve all the various problems involved with the manual operations for preparing the lattice-shaped structure member, the problems including, for example, the failure to peel the paper for releasing off from the prepreg in the form of the sheet, the inaccurate cutting of the prepreg, the wrong number of the cut vertical plates or the horizontal plates for superimposition, the wrong combination of the vertical plates or the horizontal plates, the deviation of the position of interposing the horizontal plate between the vertical plates, the occurrence of a large number of chips in cutting the prepreg in the form of the sheet, and so on. What is more important, however, is that the lattice-shaped structure member can be prepared with the automatic machine.

From the foregoing description, the process according to the present invention can produce the lattice-shaped structure members at a higher yield rate, for a shorter period of time, and with lesser labor, than the conventional processes for the preparation of the lattice-shaped structure members.

The lattice-shaped structure member prepared by the process of this invention can be effectively used e.g. as a cascade for retro rockets, and retro jet engine.

## Claims

1. A process for the preparation of a structure member in the form of a lattice which comprises the steps of:
a) filling a lattice-shaped groove (2) provided in a mold (1) with a combined filament yarn or a tow prepreg (3) prepared by impregnating a tow of a continuous fiber with a curable material, wherein a plurality of layers of the tow prepreg (3) are built up on each other in a stacked disposition, and
b) heating the mold (1) at an elevated pressure to integrate the content of the groove (2) into the structure member in the form of the lattice,
**characterized** in that
c) an opening of the mold (1) is covered with a covering member while reducing pressure in the mold (1) after completion of the filling in step (a) and before the heating in step (b).

2. The process according to claim 1, which comprises feeding a curable material into the mold (1) while reducing pressure in the mold.

3. A process according to claim 1, which comprises modifying step (a) by placing a continuous fiber into the lattice-shaped groove (2) provided in a mold (1) wherein a plurality of layers of the continuous fiber is built up on each other in a stacked disposition, then covering an opening of the mold (1) with a covering member and filling the lattice-shaped groove (2) with a curable material while reducing pressure in the mold (1).

4. The process according to any of claims 1 to 3, wherein said mold (1) is made of a material having rubber elasticity.

5. The process according to any of claims 1 to 4, wherein the lattice-shaped groove (2) comprises a longitudinal groove section (2b) for molding a longitudinal structure member and a transverse groove section (2a) for molding a transverse structure member.

6. The process according to any of claims 1 to 5, wherein a fiber-containing prepreg sheet (30A-30C) whose fibers are oriented in one direction or a fabric-containing prepreg sheet (30A-30C) is attached to at least one inner wall side of the lattice-shaped groove (2) so that the fibers of the fabric are arranged in a direction being different from the direction of the combined filament yarn, the tow or the continuous fiber.

7. The process according to claim 6, wherein the prepreg sheet (30A-30C) is arranged in a transverse groove section (2a) of the lattice-shaped groove (2) for molding a transverse structure member.

8. The process according to any of claims 1 to 7, which comprises the steps of:
attaching a fiber-containing prepreg sheet (30D) whose fibers are oriented in one direction or a fabric-containing prepreg sheet (30D) to a structure member section of the lattice-shaped structure member prepared by a process as claimed in any of claims 1 to 7 so that the fibers of the fabric are arranged in a direction being different from the direction of the combined filament yarn, the tow or the continuous fiber; and
heating the prepreg sheet (30D) to integrate it with the lattice-shaped structure member.

## Patentansprüche

1. Verfahren zur Herstellung eines Strukturelements in Form eines Gitters, das die folgenden Stufen umfaßt:
a) Füllen einer gitterförmigen Rille (Nut) (2), die in einer Form (1) vorgesehen ist, mit einem Verbund-Filament-Garn oder einem Tow-Prepreg (3), das hergestellt worden ist durch Imprägnieren eines Tow-Garns aus einer Endlos-Faser mit einem härtbaren Material, wobei eine Vielzahl von Schichten aus dem Tow-Prepreg (3) stapelförmig aufeinandergelegt werden, und
b) Erhitzen der Form (1) bei einem erhöhten Druck, um den Inhalt der Rille (Nut) (2) zu dem Strukturelement in Form des Gitters zu integrieren,
**dadurch gekennzeichnet**, daß
c) eine Öffnung der Form (1) mit einem Abdeckelement abgedeckt ist, während der Druck in der Form (1) nach Beendigung des Auffüllens in der Stufe (a) und vor dem Erhitzen in der Stufe (b) vermindert wird.

2. Verfahren nach Anspruch 1, das umfaßt das Einführen eines härtbaren Materials in die Form (1), während der Druck in der Form vermindert wird.

3. Verfahren nach Anspruch 1, das umfaßt die Modifizierung der Stufe (a) durch Einbringen einer Endlos-Faser in die gitterförmige Rille (2), die in einer Form (1) vorgesehen ist, wobei eine Vielzahl von Schichten aus der Endlos-Faser stapelförmig aufeinander angeordnet werden, dann eine Öffnung der Form (1) mit einem Abdeckelement abgedeckt wird und die gitterförmige Rille (2) mit einem härtbaren Material gefüllt wird, während der Druck in der Form (1) vermindert wird.

4. Verfahren nach einem der Ansprüche 1 bis 3, worin die Form (1) aus einem Material mit einer Kautschukelastizität hergestellt ist.

5. Verfahren nach einem der Ansprüche 1 bis 4, bei dem die gitterförmige Rille (2) umfaßt einen Längsrillen-Abschnitt (2b) zum Formen eines longitudinalen Strukturelements und einen Querrillen-Abschnitt (2a) zum Formen eines transversalen Strukturelements.

6. Verfahren nach einem der Ansprüche 1 bis 5, bei dem eine faserhaltige Prepreg-Folie (30A-30C), deren Fasern in einer Richtung ausgerichtet sind, oder eine ein Gewebe enthaltende Prepreg-Folie (30A-30C) an mindestens einer Innenwandseite der gitterförmigen Rille (2) so befestigt wird, daß die Fasern des Gewebes in einer Richtung angeordnet sind, die verschieden ist von der Richtung des Verbund-Filamentgarns, des Tow-Garns oder der Endlos-Faser.

7. Verfahren nach Anspruch 6, bei dem die Prepreg-Folie (30A-30C) in einem transversalen Rillen-Abschnitt (2a) der gitterförmigen Rille (2) angeordnet ist zum Formen eines transversalen Strukturelements.

8. Verfahren nach einem der Ansprüche 1 bis 7, das die folgenden Stufen umfaßt:
Befestigen einer faserhaltigen Prepreg-Folie (30D), deren Fasern in einer Richtung ausgerichtet sind, oder einer ein Gewebe enthaltenden Prepreg-Folie (30D) an einem Strukturelement-Abschnitt des gitterförmigen Strukturelements, das nach einem Verfahren nach einem der Ansprüche 1 bis 7 hergestellt worden ist, so daß die Fasern des Gewebes in einer Richtung angeordnet sind, die verschieden ist von der Richtung des Verbund-Filamentgarns, des Tow-Garns oder der Endlos-Faser; und
Erhitzen der Prepreg-Folie (30D), um sie mit dem gitterförmigen Strukturelement zu integrieren.

## Revendications

1. Procédé pour la préparation d'un élément de structure sous forme d'une grille qui comprend les étapes suivantes:
a) remplissage d'une rainure en forme de grille (2) prévue dans un moule (1) avec un fil continu combiné ou un préimprégné de fil d'étoupe (3) réalisé par imprégnation d'un fil d'étoupe d'une fibre continue avec un matériau cuirable, une pluralité de couches du préimprégné de fil d'étoupe (3) étant superposées sous forme de pile, et
b) chauffage du moule (1) à une pressions élevée pour intégrer le contenu de la rainure (2) dans l'élément de structure sous forme de grille,
caractérisé par le fait que
c) un orifice du moule (1) est couvert par un élément de couverture lorsque la pression dans le moule (1) est réduite après la fin du remplissage de l'étape (a) et avant l'étape de chauffage (b).

2. Procédé selon la revendication 1, qui comprend l'alimentation d'un matériau cuirable dans le moule (1) tout en réduisant la pression dans le moule.

3. Procédé selon la revendication 1, qui comprend la modification de l'étape (a) en disposant une fibre continue dans la rainure en forme de grille (2), prévue dans un moule (1), dans lequel une pluralité de couches de la fibre continue est empilée (superposée en forme de pile), puis couvrant un orifice du moule (1) par un élément de couverture et remplissant la rainure en forme de grille (2) avec un matériau cuirable tout en réduisant la pression dans le moule (1).

4. Procédé selon l'une quelconque des revendications 1 à 3, dans lequel ledit moule (1) est réalisé dans un matériau ayant une élasticité de caoutchouc.

5. Procédé selon l'une quelconque des revendications 1 à 4, dans lequel la rainure en forme de grille (2) comprend une section longitudinale de rainure (2b) pour mouler un élément de structure longitudinal et une section transversale de rainure (2a) pour mouler un élément de structure transversal.

6. Procédé selon l'une quelconque des revendications 1 à 5, dans lequel une feuille de fil d'étoupe (30A-30C) contenant des fibres, les fibres de laquelle sont orientées dans une direction, ou une feuille de fil d'étoupe (30A-30C) contenant un tissu, est attachée à au moins une paroi interne de la rainure (2) en forme de grille, de façon à ce que les fibres du tissu sont arrangées dans une direction différente de la direction du fil continu combiné, du fil d'étoupe ou de la fibre continue.

7. Procédé selon la revendication 6, dans lequel la feuille de fil d'étoupe (30A-30C) est arrangée dans une section transversale de rainure (2a) de la rainure (2) en forme de grille pour mouler un élément de structure transversal.

8. Procédé selon l'une quelconque des revendications 1 à 7, qui comprend les étapes suivantes:
fixation d'une feuille de fil d'étoupe (30D) contenant des fibres, les fibres de laquelle sont orientées dans une direction, ou d'une feuille de fil d'étoupe (30D) contenant un tissu, à une section d'élément de structure de l'élément de structure en forme de grille réalisé à l'aide d'un procédé selon l'une quelconque des revendications 1 à 7 de façon à ce que les fibres du tissu sont arrangées dans une direction différente de la direction du fil continu combiné, du fil d'étoupe ou de la fibre continue, et
chauffage de la feuille (30D) de fil d'étoupe pour l'intégrer dans l'élément de structure sous forme de grille.
